# FASCICULE DE BREVET EUROPEEN

(11) **EP 3 253 605 B1**
(45) Date de publication et mention de la délivrance du brevet: **02.01.2019**
(21) Numéro de dépôt: 16705558.1
(22) Date de dépôt: 11.01.2016
(51) Int. Cl.: B60K 6/48, B60K 6/52, B60W 10/02, B60W 10/06, B60W 10/08, B60W 30/18, B60W 20/10, B60W 20/40

(54) **PROCÉDÉ ET DISPOSITIF D'AIDE AUX DÉCISIONS DE COUPLAGE/DÉCOUPLAGE D'UNE MACHINE MOTRICE D'UN VÉHICULE HYBRIDE EN FONCTION DU POTENTIEL DE RÉCUPÉRATION DE COUPLE D'UNE AUTRE MACHINE MOTRICE**
VERFAHREN UND VORRICHTUNG ZUR UNTERSTÜTZUNG VON ENTSCHEIDUNGEN HINSICHTLICH DER KOPPLUNG/ENTKOPPLUNG EINER ANTRIEBSMASCHINE IN EINEM HYBRIDFAHRZEUG GEMÄSS DES DREHMOMENTRÜCKGEWINNUNGSPOTENZIAL EINER ANDEREN ANTRIEBSMASCHINE
METHOD AND DEVICE FOR ASSISTING WITH DECISIONS REGARDING COUPLING/UNCOUPLING OF A PRIME MOVER IN A HYBRID VEHICLE ACCORDING TO THE TORQUE RECUPERATION POTENTIAL OF ANOTHER PRIME MOVER

(30) Priorité: 02.02.2015 FR 1550773
(43) Date de publication de la demande: 13.12.2017
(73) Titulaire: PSA AUTOMOBILES S.A., 78300 Poissy (FR)
(72) Inventeur: BLANCHET, Alexandre, 78124 Montainville (FR); MILHAU, Yohan, 78400 Chatou (FR); KOUKI, Najib, 78180 Montigny le Bretonneux (FR)
(86) Numéro de dépôt international: PCT/FR2016/050037
(87) Numéro de publication internationale: WO 2016/124831

(56) Documents cités:
- WO-A1-2014/087097
- DE-A1-102011 056 168
- FR-A1- 2 996 510
- US-A1- 2004 104 699

## Description

L'invention concerne les véhicules hybrides ayant une chaîne de transmission comportant un moteur thermique et au moins deux machines motrices, et plus précisément l'aide aux prises de décision de couplage/ découplage de l'une des machines motrices à la chaîne de transmission de tels véhicules hybrides.

On entend ici par « machine motrice » une machine non-thermique agencée de manière à fournir du couple pour déplacer un véhicule, soit seule soit en complément d'un moteur thermique. Il pourra par exemple s'agir d'une machine (ou moteur) électrique, d'une machine hydraulique, d'une machine pneumatique (ou à air comprimé), ou d'un volant d'inertie.

Lorsque le moteur thermique est destiné à fournir du couple à un train avant (ou arrière) d'un véhicule, une première machine motrice est alors destinée à fournir du couple au train arrière (ou avant) de ce véhicule, et la seconde machine motrice, qui est couplée au moteur thermique, est également destinée à fournir du couple au train avant (ou arrière).

Certains véhicules hybrides, éventuellement de type automobile, comprennent un dispositif chargé d'aider le calculateur de supervision qui assure la gestion de leur chaîne de transmission à décider quand il faut coupler/découpler une première machine motrice à/de cette chaîne de transmission. On notera que tout type de couplage/découplage est ici concerné, et notamment ceux par crabot et par embrayage.

Une proposition de couplage d'une machine motrice est généralement destinée à minimiser la consommation de carburant par le moteur thermique, par exemple grâce à une récupération d'énergie électrique dans une phase de freinage, et/ou à augmenter les performances du véhicule hybride, par exemple par adjonction au couple qui est produit par son moteur thermique du couple que peut produire cette machine motrice lors d'une phase de roulage.

Les propositions de couplage/découplage sont habituellement prises en fonction d'informations qui sont relatives au véhicule considéré, comme par exemple l'enfoncement de la pédale d'accélérateur, l'enfoncement de la pédale de frein, la vitesse en cours du véhicule, l'inclinaison en cours du véhicule, et une contrainte d'utilisation d'une machine motrice et/ou du moteur thermique. Elles sont ensuite transmises au calculateur de supervision de la chaîne de transmission, afin qu'il décide de les suivre ou de les rejeter en fonction de ses propres contraintes, éventuellement temporaires.

De nombreux dispositifs d'aide fournissent des propositions de couplage/découplage qui peuvent conduire à un couplage permanent d'une machine motrice pendant une durée relativement longue, alors même que la vitesse du véhicule est stabilisée et donc que cette machine motrice n'est pas utilisée. Cela induit des pertes d'énergie par dissipation (typiquement plusieurs kilowatts à vitesse élevée) du fait du couple de perte de cette machine motrice, et cela peut endommager cette dernière lorsqu'elle présente un régime maximal au-delà duquel un découplage est nécessaire. Par ailleurs, lorsque le mode de fonctionnement de type tout électrique (ou ZEV (« Zéro Emission Véhicule »)) est privilégié à basse vitesse, chaque proposition de découplage est alors rejetée lorsque la vitesse du véhicule est inférieure à un seuil (par exemple égal à 50 km/h).

Afin d'améliorer la situation, il a été proposé dans le document brevet portant le numéro de dépôt FR 1259542 de faire une proposition de couplage lorsque le moteur thermique produit un couple maximal ou minimal, afin d'améliorer les performances globales du véhicule. Lorsque la proposition de couplage est acceptée, on injecte du carburant dans le moteur thermique tant que le couple requis (fonction de la volonté d'agir du conducteur) est supérieur à la somme du couple de perte du moteur thermique et d'un couple de prélèvement de la seconde machine motrice. Hélas, ce mode de fonctionnement ne s'avère pas optimal du fait qu'un couplage de la première machine motrice peut être demandé alors que la seconde machine motrice est encore en mesure de récupérer du couple grâce à son couplage au moteur thermique.

L'invention a donc notamment pour but d'améliorer la situation, et plus précisément d'optimiser la phase de couplage de la première machine motrice en retardant autant que possible la demande de couplage par une prise en compte du potentiel de récupération de couple par la seconde machine motrice qui est couplée au moteur thermique.

Elle propose notamment un procédé destiné à aider au couplage/ découplage d'une première machine motrice à une chaîne de transmission d'un véhicule hybride comprenant en outre un moteur thermique et une seconde machine motrice propre à être couplée à ce dernier.

Ce procédé d'aide se caractérise par le fait qu'il comprend une étape dans laquelle, en cas de fonctionnement du moteur thermique et d'un couple requis négatif :
- on compare le couple requis à au moins un premier seuil s1, égal à la somme d'un couple de perte cp_{MT} du moteur thermique et d'un couple de prélèvement maximum cprmax_{MM2} de la seconde machine motrice, et à au moins un second seuil s2, égal à la somme du couple de perte cp_{MT} et d'un couple de prélèvement minimum cprmin_{MM2} de la seconde machine motrice, et
- lorsque le couple requis devient inférieur à au moins le premier seuil s1 on ordonne le couplage de la première machine motrice, puis lorsque le couple requis devient supérieur à au moins le second seuil s2 on ordonne le découplage de la première machine motrice.

Ainsi, on peut maintenir la première machine motrice plus souvent découplée sans pénaliser la performance du véhicule, ce qui évite de subir inutilement ses pertes et permet d'augmenter sa longévité tout comme celle de ses moyens de couplage/découplage. De plus, cela permet d'augmenter le rendement global du véhicule en raison d'une moindre consommation d'énergie électrique, et donc finalement de réduire la consommation de carburant et les émissions de polluants.

Le procédé d'aide selon l'invention peut comporter d'autres caractéristiques qui peuvent être prises séparément ou en combinaison, et notamment :
- on peut comparer le couple requis à la somme du premier seuil s1 et d'un premier couple de confirmation cc1 ;
- on peut comparer le couple requis à la somme du second seuil s2 et d'un second couple de confirmation cc2 ;
- on peut ordonner le couplage de la première machine motrice lorsque le couple requis demeure inférieur à au moins le premier seuil s1 pendant une première durée d1 choisie et/ou lorsqu'une intégrale d'une courbe du couple requis sur la première durée d1 est supérieure à une première valeur v1 ;
   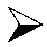 la première durée d1 et/ou la première valeur v1 peu(ven)t être fonction d'au moins un paramètre choisi parmi au moins une vitesse en cours du véhicule, une pente en cours d'une voie de circulation sur laquelle circule le véhicule, et un mode de roulage sélectionné du véhicule ;
- on peut ordonner le découplage de la première machine motrice lorsque le couple requis demeure supérieur à au moins le second seuil s2 pendant une seconde durée d2 choisie et/ou lorsqu'une intégrale d'une courbe du couple requis sur la seconde durée d2 est supérieure à une seconde valeur v2 ;
   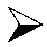 la seconde durée d2 et/ou la seconde valeur v2 peu(ven)t être fonction d'au moins un paramètre choisi parmi au moins une vitesse en cours du véhicule, une pente en cours d'une voie de circulation sur laquelle circule le véhicule, et un mode de roulage sélectionné du véhicule ;
- le couple requis peut être fonction d'une volonté d'agir d'un conducteur du véhicule, définie par un niveau d'enfoncement d'une pédale d'accélérateur du véhicule et/ou un niveau d'enfoncement d'une pédale de frein du véhicule ou encore par l'activation d'un système de régulation automatique ou d'asservissement de la vitesse du véhicule. Cette volonté d'agir du conducteur pourra être interprétée en couple-mètre sur l'arbre primaire de l'organe producteur de couple concerné ou en couple-mètre à la roue.

L'invention propose également un dispositif destiné à aider au couplage/découplage d'une première machine motrice à une chaîne de transmission d'un véhicule hybride comprenant en outre un moteur thermique et une seconde machine motrice propre à être couplée à ce dernier.

Ce dispositif d'aide se caractérise par le fait qu'il est agencé, en cas de fonctionnement du moteur thermique et d'un couple requis négatif :
- pour comparer le couple requis à au moins un premier seuil s1, égal à la somme d'un couple de perte cp_{MT} du moteur thermique et d'un couple de prélèvement maximum cprmax_{MM2} de la seconde machine motrice, et à au moins un second seuil s2, égal à la somme du couple de perte cp_{MT} et d'un couple de prélèvement minimum cprmin_{MM2} de la seconde machine motrice, et
- lorsque le couple requis devient inférieur à au moins le premier seuil s1, pour ordonner le couplage de la première machine motrice, puis lorsque le couple requis devient supérieur à au moins le second seuil s2 pour ordonner le découplage de la première machine motrice.

L'invention propose également un véhicule hybride, éventuellement de type automobile, et comprenant, d'une part, une chaîne de transmission comportant une première machine motrice, un moteur thermique et une seconde machine motrice propre à être couplée à ce dernier, et, d'autre part, un dispositif d'aide du type de celui présenté ci-avant.

Par exemple, chaque machine motrice peut être choisie parmi (au moins) un moteur électrique, une machine hydraulique, une machine pneumatique et un volant d'inertie.

D'autres caractéristiques et avantages de l'invention apparaîtront à l'examen de la description détaillée ci-après, et des dessins annexés, sur lesquels :

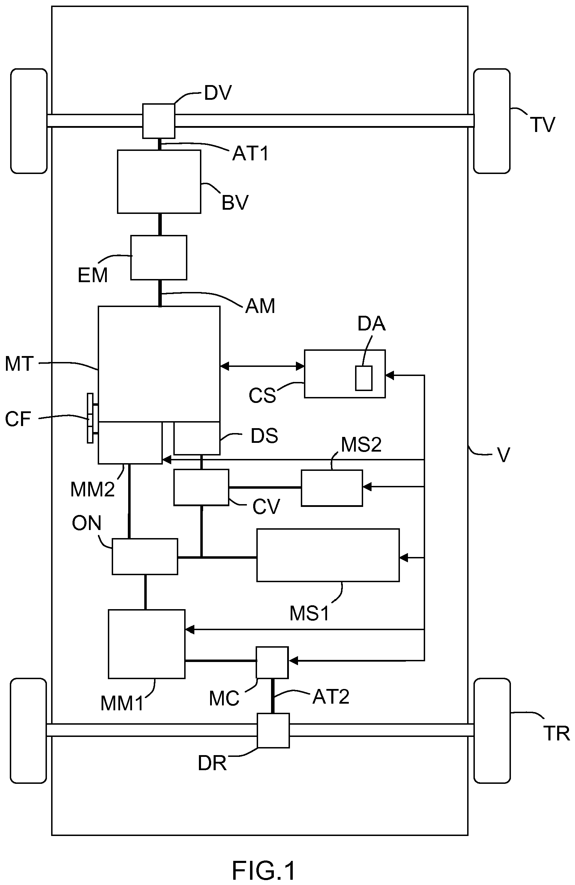

- la figure 1 illustre schématiquement et fonctionnellement un véhicule hybride comprenant une chaîne de transmission et un calculateur de supervision équipé d'un dispositif d'aide selon l'invention, et

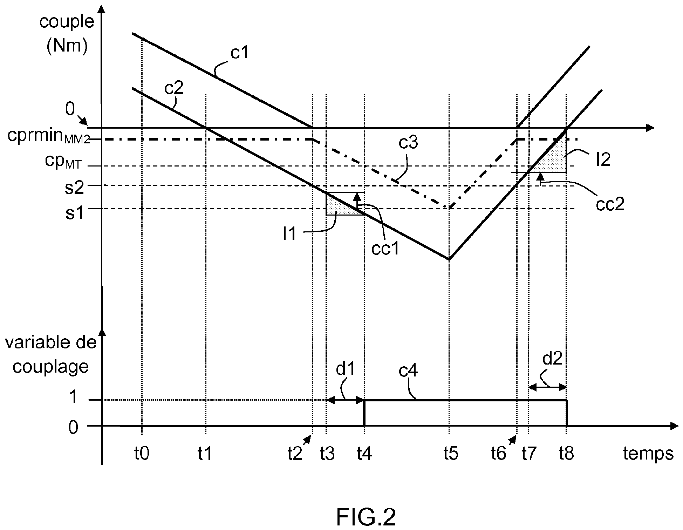

- la figure 2 illustre schématiquement dans une partie haute d'un diagramme une courbe c1 d'évolution temporelle de la consigne de couple effectif du moteur thermique d'un véhicule hybride, une courbe c2 d'évolution temporelle du couple requis au sein du véhicule hybride, et une courbe c3 d'évolution temporelle de la consigne de couple de la seconde machine motrice du véhicule hybride, et dans une partie basse du diagramme une courbe c4 d'évolution temporelle de la variable de couplage de la première machine motrice du véhicule hybride.

L'invention a notamment pour but de proposer un procédé d'aide, et le dispositif d'aide DA associé, destinés à aider au couplage/ découplage d'une première machine motrice MM1 à une/d'une chaîne de transmission d'un véhicule hybride V comprenant en outre un moteur thermique MT et une seconde machine motrice MM2 propre à être couplée à ce dernier (MT).

Dans ce qui suit, on considère, à titre d'exemple non limitatif, que le véhicule hybride V est de type automobile. Il s'agit par exemple d'une voiture. Mais l'invention n'est pas limitée à ce type de véhicule hybride. Elle concerne en effet tout type de véhicule hybride terrestre ou maritime (ou fluvial) ou encore aéronautique, comprenant une chaîne de transmission comportant un moteur thermique MT et au moins deux machines motrices MMj.

Il est rappelé que l'on entend ici par « machine motrice » une machine non-thermique agencée de manière à fournir du couple pour déplacer un véhicule, soit seule soit en complément d'un moteur thermique.

Par ailleurs, on entend ici par « moteur thermique » un moteur consommant du carburant ou des produits chimiques. Par conséquent, dans le domaine aéronautique il pourra notamment s'agir d'un réacteur, d'un turboréacteur ou d'un moteur chimique.

D'autre part, on considère dans ce qui suit, à titre d'exemple non limitatif, que les machines motrices MMj sont de type électrique. Mais l'invention n'est pas limitée à ce type de machine motrice. Ainsi, elle concerne également et notamment les machines (ou moteurs) hydrauliques, les machines (ou moteurs) pneumatiques (ou à air comprimé), et les volants d'inertie. Par ailleurs, on notera que les machines motrices MMj peuvent être de types différents.

On a schématiquement représenté sur la figure 1 un véhicule hybride V comprenant une chaîne de transmission, un calculateur de supervision CS propre à superviser (ou gérer) le fonctionnement de la chaîne de transmission, et un dispositif d'aide DA selon l'invention.

La chaîne de transmission comprend notamment un moteur thermique MT, un arbre moteur AM, un embrayage EM, une boite de vitesses BV, un premier arbre de transmission AT1, au moins deux machines motrices MMj (ici des moteurs électriques), un moyen de couplage/découplage MC pour l'une des machines motrices MMj, un second arbre de transmission AT2, et des premiers moyens de stockage d'énergie (ici électrique) MS1.

On considère dans ce qui suit, à titre d'exemple illustratif, que la chaîne de transmission ne comprend que des première MM1 (j = 1) et seconde MM2 (j = 2) machines motrices (ici électriques) couplées à des premiers moyens de stockage d'énergie (électrique) MS1 de type basse tension (par exemple d'environ 220 V). Mais la chaîne de transmission pourrait comprendre plus de deux machines motrices.

On notera que les première MM1 et seconde MM2 machines motrices sont préférentiellement couplées aux premiers moyens de stockage d'énergie MS1 via un onduleur ON de type DC/DC, comme illustré sur la figure 1.

Par exemple, le premier arbre de transmission AT1 est chargé d'entraîner en rotation les roues du train avant TV du véhicule V (de préférence via un différentiel avant DV), tandis que le second arbre de transmission AT2 est chargé d'entraîner en rotation les roues du train arrière TR du véhicule V (de préférence via un différentiel arrière DR). Mais l'inverse est également possible.

Le moteur thermique MT comprend un vilebrequin (non représenté) qui est solidarisé fixement à l'arbre moteur AM afin d'entraîner ce dernier (AM) en rotation.

La boîte de vitesses BV comprend au moins un arbre d'entrée (ou primaire) destiné à recevoir le premier couple produit par le moteur thermique MT via l'embrayage EM, et un arbre de sortie destiné à recevoir ce premier couple via l'arbre d'entrée AE afin de le communiquer au premier arbre de transmission AT1 auquel il est couplé et qui est couplé indirectement aux roues (ici) avant du véhicule V via le différentiel avant DV. Par exemple, l'embrayage EM comprend un volant moteur solidarisé fixement à l'arbre moteur AM et un disque d'embrayage solidarisé fixement à l'arbre d'entrée de la boîte de vitesses BV.

On notera que la boîte de vitesses BV peut être automatisée ou non. Par conséquent, il pourra par exemple s'agir d'une boîte automatique, d'une boîte de vitesses manuelle pilotée ou non, ou d'une boîte de vitesses à double embrayage (ou DCT). Il peut également s'agir d'un train épicycloïdal comprenant un, deux ou trois synchronisateurs. Dans ce dernier cas, le moteur thermique MT peut être couplé à une couronne, une machine motrice peut être couplée à un planétaire, et les roues peuvent être couplées (via un différentiel) à un porte-satellites. Les synchronisateurs permettent de solidariser deux éléments entre eux afin de fixer un couple et un régime sur deux des trois arbres du train épicycloïdal.

Le moteur thermique MT peut produire un couple qui est compris entre un couple minimum et un couple maximum et qui peut être déterminé par le dispositif de contrôle DC selon l'invention. Ce couple est défini par une consigne de couple c1.

Le moyen de couplage/découplage MC est ici chargé de coupler/ découpler la première machine motrice MM1 au/du second arbre de transmission AT2, sur ordre du calculateur de supervision CS, afin de communiquer le couple qu'il produit, grâce à l'énergie stockée dans les premiers moyens de stockage MS1, au second arbre de transmission AT2 qui est couplé indirectement aux roues (ici) arrière du véhicule V via le différentiel arrière DR. Cet ordre est défini par une variable de couplage c4 qui peut être de type binaire (par exemple la valeur un (1) désigne une demande de couplage, tandis que la valeur zéro (0) désigne une demande de découplage). Ce moyen de couplage/découplage MC est par exemple un mécanisme à crabots ou bien un embrayage ou encore un convertisseur de couple hydraulique.

La seconde machine motrice MM2 est couplée au moteur thermique MT. Il s'agit, par exemple, d'un alterno-démarreur chargé de lancer le moteur thermique MT afin de lui permettre de démarrer, y compris en présence d'un système de contrôle d'arrêt et de redémarrage automatique (ou « stop and start »), et de produire un couple destiné à être transmis au premier arbre de transmission AT1 via l'embrayage EM et la boîte de vitesses BV. Cette production de couple se fait grâce à l'énergie qui est stockée dans les premiers moyens de stockage MS1, ainsi que grâce à l'énergie qui est fournie directement par la seconde machine motrice MM2, si celle-ci est pilotée en mode générateur, et sans solliciter l'énergie présente dans les premiers moyens de stockage MS1 (on parle alors de dérivation de puissance). Par ailleurs, ce couple est défini par une consigne de couple c3.

On notera également que dans l'exemple non limitatif illustré sur la figure 1, la chaîne de transmission comprend également un démarreur de secours DS chargé de lancer le moteur thermique MT afin de lui permettre de démarrer lorsque la seconde machine motrice MM2 est dans l'incapacité de le faire, par exemple du fait que les moyens de stockage d'énergie électrique MS1 ne disposent pas de suffisamment d'énergie électrique. Ce démarreur de secours DS, qui n'est pas obligatoire, est ici couplé à des seconds moyens de stockage MS2 de type très basse tension (par exemple 12 V, 24 V ou 48V), via un convertisseur CV de type DC/DC. Ce dernier (CV) peut être également couplé, comme illustré, à l'onduleur ON et aux premiers moyens de stockage d'énergie électrique MS1. Par exemple, les seconds moyens de stockage MS2 sont agencés sous la forme d'une batterie.

Les fonctionnements du moteur thermique MT, des première MM1 et seconde MM2 machines motrices, et des moyens de couplage/découplage MC peuvent être contrôlés par le calculateur de supervision CS. Ce dernier (CS) est par exemple capable de faire fonctionner le véhicule hybride V dans au moins trois modes de roulage différents. Dans un premier mode dit « thermique » seul le moteur thermique MT est utilisé pour déplacer le véhicule (hybride) V. Dans un deuxième mode dit « Zéro Emission Véhicule » (ou ZEV)) seule l'une au moins des machines motrices MMj est utilisée pour déplacer le véhicule V. Dans un troisième mode dit « hybride » au moins l'une des machines motrices MMj est utilisée en complément du moteur thermique MT pour déplacer le véhicule V.

Comme indiqué précédemment, l'invention propose de mettre en oeuvre dans le véhicule V un procédé destiné à aider au couplage/découplage de la première machine motrice MM1 à/de la chaîne de transmission du véhicule V.

Un tel procédé peut être mis en oeuvre par le dispositif d'aide DA.

Dans l'exemple non limitatif illustré sur la figure 1, le dispositif d'aide DA fait partie du calculateur de supervision CS. Mais cela n'est pas obligatoire. Ce dispositif (d'aide) DA pourrait en effet être un équipement qui est couplé au calculateur de supervision CS, directement ou indirectement. Par conséquent, le dispositif (d'aide) DA peut être réalisé sous la forme de modules logiciels (ou informatiques ou encore « software »), ou bien d'une combinaison de circuits électroniques (ou « hardware ») et de modules logiciels.

Le procédé d'aide, selon l'invention, comprend une étape qui est initiée lorsque le moteur thermique MT est en fonctionnement (ou alimenté en carburant) et qu'un couple requis c2 est négatif.

On notera que lorsque le moteur thermique MT est en fonctionnement il produit un couple qui est défini par une consigne de couple c1 déterminée par le calculateur de supervision CS.

Par ailleurs, le couple requis c2 est déterminé par le calculateur de supervision CS en fonction au moins de la volonté d'agir du conducteur du véhicule V. Cette volonté d'agir est par exemple définie au moins par le niveau d'enfoncement de la pédale d'accélérateur du véhicule V et/ou le niveau d'enfoncement de la pédale de frein du véhicule V ou encore par l'activation d'un système de régulation automatique ou d'asservissement de la vitesse du véhicule V. Cette volonté d'agir du conducteur pourra être interprétée en couple-mètre sur l'arbre primaire de l'organe producteur de couple concerné ou en couple-mètre à la roue. On notera que ce couple requis c2 peut être également déterminé en fonction d'au moins une autre information relative au véhicule V (et à son état), comme par exemple la vitesse en cours du véhicule V, l'inclinaison en cours du véhicule V (du fait de la pente de la voie de circulation sur laquelle il se déplace), ou une contrainte d'utilisation d'une machine motrice MMj (comme par exemple une température limite d'utilisation) et/ou du moteur thermique MT.

Le couple requis c2 sert à chaque instant à définir la consigne de couple c1 du moteur thermique MT, la consigne de couple c3 de la seconde machine motrice MM2 et la consigne de couple de la première machine motrice MM1.

Dès que l'étape du procédé d'aide est initiée à un instant donné pour les raisons précitées, on (le dispositif (d'aide) DA) commence par comparer le couple requis c2 à au moins un premier seuil s1 et à au moins un second seuil s2. Le premier seuil s1 est égal à la somme d'un couple de perte cp_{MT} du moteur thermique et d'un couple de prélèvement maximum cprmax_{MM2} de la seconde machine motrice MM2, correspondant au couple maximal que cette dernière (MM2) peut prélever (éventuellement limité par des contraintes thermiques ou organiques (ou couple de limitation cl_{MM2} (« limitation de façade »)). Le second seuil s2 est égal à la somme du couple de perte cp_{MT} et d'un couple de prélèvement minimum cprmin_{MM2} de la seconde machine motrice MM2.

Le couple de perte cp_{MT} est principalement constitué des pertes internes de couple qui sont induites par les frottements au sein du moteur thermique MT.

Le couple de prélèvement minimum cprmin_{MM2} est le couple minimal que doit prélever la seconde machine motrice MM2 pour assurer le maintien de la tension du réseau de bord du véhicule. Il s'agit d'un couple prioritaire qui doit être prélevé pour assurer l'alimentation des auxiliaires et du réseau électrique embarqué dans le véhicule V, et un niveau minimal de charge (ou SOC (« State Of Charge »)) et de puissance des premiers moyens de stockage MS1. On notera que ce couple prioritaire cprmin_{MM2} peut être éventuellement choisi égal à zéro (0).

Le couple de limitation cl_{MM2} est une contrainte de couple de récupération maximum (ou couple minimum) applicable par la seconde machine motrice MM2. Ce couple est défini par la caractéristique de la liaison utilisée (par exemple une courroie), c'est-à-dire sa capacité à résister aux efforts, par la température de cette liaison, ainsi que par des limitations appliquées à la seconde machine motrice MM2 qui sont composées de sa température de fonctionnement ou de l'état de charge des moyens de stockage (puisque si ces derniers sont pleins la seconde machine motrice MM2 ne peut plus produire de couple de récupération).

Une fois que les comparaisons ont été effectuées, si l'on (le dispositif DA) constate que le couple requis c2 est devenu inférieur à au moins le premier seuil s1, alors on (le dispositif DA) ordonne le couplage de la première machine motrice MM1 via les moyens de couplage MC, puis lorsque le couple requis c2 devient supérieur à au moins le second seuil s2 on (le dispositif DA) ordonne le découplage de la première machine motrice MM1.

En d'autres termes, tant que le couple requis c2 (et donc la volonté d'agir du conducteur) reste supérieur(e) à au moins le premier seuil S1, l'ensemble composé du moteur thermique MT et de la seconde machine motrice MM2 est en mesure de réaliser le couple requis C2, et donc il n'y a pas de raison de demander un couplage de la première machine motrice MM1 au train arrière TR. Par ailleurs, tant que le couple requis c2 (et donc la volonté d'agir du conducteur) demeure inférieur(e) à au moins le second seuil S2, la première machine motrice MM1 est utile à la récupération de couple grâce à son couplage au train arrière TR, et donc il n'y a pas de raison de demander un découplage de cette première machine motrice MM1 du train arrière TR.

Ainsi, on ne demande le couplage de la première machine motrice MM1 que lorsque cela s'avère effectivement nécessaire, et on ne demande le découplage de la première machine motrice MM1 que lorsque l'on est sûr de ne plus avoir besoin de l'utiliser, sans que cela ne pénalise la performance du véhicule V. En maintenant la première machine motrice MM1 plus souvent découplée, on évite de subir ses pertes et donc on augmente le rendement global du véhicule V en raison d'une moindre consommation d'énergie électrique, et finalement on réduit la consommation de carburant et les émissions de polluants.

De plus, en réduisant le nombre de couplage/découplage on réduit la quantité d'énergie électrique qui est perdue lors de la synchronisation de la première machine motrice MM1 aux régimes équivalents des roues du véhicule V. Cette réduction du nombre de couplage/découplage peut également et éventuellement permettre l'utilisation de moyens de couplage MC un peu moins onéreux du fait qu'ils n'auront plus à supporter des sollicitations importantes.

On notera qu'il peut être avantageux de comparer le couple requis à la somme du premier seuil s1 et d'un premier couple de confirmation cc1 plutôt qu'au seul premier seuil s1. Ce premier couple de confirmation cc1 est destiné à anticiper une demande de couplage en préservant la continuité du couple total aux roues en évitant d'aller jusqu'à la valeur maximale sur le train avant TV, puis de coupler le train arrière TR. Il peut être positif ou négatif. Par exemple, il peut être compris entre environ 0 Nm et environ 20 Nm au niveau du vilebrequin du moteur thermique MT.

De même, il peut être avantageux de comparer le couple requis à la somme du second seuil s2 et d'un second couple de confirmation cc2 plutôt qu'au seul second seuil s2. Ce second couple de confirmation cc2 est destiné à retarder la décision de demande de découplage afin d'éviter une demande de découplage intempestive si le couple requis C2 venait à diminuer de nouveau (ce qui impliquerait un nouveau couplage). Il peut être positif ou négatif. Par exemple, il peut être compris entre environ 0 Nm et environ 20 Nm au niveau du vilebrequin du moteur thermique MT.

On notera également qu'il est avantageux d'ordonner le couplage de la première machine motrice MM1 lorsque le couple requis demeure inférieur au premier seuil s1 (ou à la somme du premier seuil s1 et du premier couple de confirmation cc1) pendant une première durée d1 choisie et/ou lorsqu'une première intégrale I1 d'une courbe formée à partir des valeurs successives prises par le couple requis c2 sur cette première durée d1 est supérieure à une première valeur v1.

Cette première intégrale I1 intègre la valeur absolue de l'écart entre le premier seuil s1 (ou la somme du premier seuil s1 et du premier couple de confirmation cc1) et le couple requis c2, uniquement lorsque ce dernier (c2) est supérieur au premier seuil s1 (ou à la somme du premier seuil s1 et du premier couple de confirmation cc1). La première intégrale I1 est réinitialisée lorsque le couple requis c2 atteint un maximum prédéfini ou lorsque la première durée d1 est écoulée. L'unité de cette première intégrale I1 est le Newton Mètre Seconde (N.m.s).

Lorsque cette option est mise en oeuvre, la première durée d1 et/ou la première valeur v1 peu(ven)t être fonction d'au moins un paramètre qui est choisi parmi au moins la vitesse en cours du véhicule V, la pente en cours de la voie de circulation sur laquelle circule le véhicule V, et le mode de roulage qui a été sélectionné pour le véhicule V.

De même, il est avantageux d'ordonner le découplage de la première machine motrice MM1 lorsque le couple requis c2 demeure supérieur au second seuil s2 (ou à la somme du second seuil s2 et du second couple de confirmation cc2) pendant une seconde durée d2 choisie et/ou lorsqu'une seconde intégrale I2 d'une courbe formée à partir des valeurs successives prises par le couple requis c2 sur cette seconde durée d2 est supérieure à une seconde valeur v2.

Cette seconde intégrale I2 intègre la valeur absolue de l'écart entre le second seuil s2 (ou la somme du second seuil s2 et du second couple de confirmation cc2) et le couple requis c2, uniquement lorsque ce dernier (c2) est supérieur au second seuil s2 (ou à la somme du second seuil s2 et du second couple de confirmation cc2). La seconde intégrale I2 est réinitialisée lorsque le couple requis c2 atteint un maximum prédéfini ou lorsque la seconde durée d2 est écoulée. L'unité de cette seconde intégrale I2 est le Newton Mètre Seconde (N.m.s).

Lorsque cette dernière option est mise en oeuvre, la seconde durée d2 et/ou la seconde valeur v2 peu(ven)t être fonction d'au moins un paramètre qui est choisi parmi au moins la vitesse en cours du véhicule V, la pente en cours de la voie de circulation sur laquelle circule le véhicule V, et le mode de roulage qui a été sélectionné pour le véhicule V.

On a schématiquement illustré sur le diagramme à parties haute et basse de la figure 2 un exemple d'évolution temporelle de différents paramètres du véhicule V pendant une phase de roulage. Plus précisément, dans la partie haute le diagramme comprend une courbe c1 d'évolution temporelle de la consigne de couple du moteur thermique MT d'un véhicule V, une courbe c2 d'évolution temporelle du couple requis au sein de ce véhicule V, et une courbe c3 d'évolution temporelle de la consigne de couple de la seconde machine motrice MM2 de ce véhicule V. Dans la partie basse le diagramme comprend une courbe c4 d'évolution temporelle de la variable (binaire) de couplage de la première machine motrice MM1 du véhicule V.

Entre les instants t0 et t1, le couple requis c2 (et donc la volonté d'agir du conducteur) est décroissant mais positif. La consigne de couple cp_{MT} du moteur thermique MT est donc non nulle, et par conséquent on injecte du carburant dans le moteur thermique MT. En parallèle, la consigne de couple c3 de la seconde machine motrice MM2 est égale au couple de prélèvement minimum cprmin_{MM2} (qui est ici choisi non nul). De même, la variable de couplage c4 est à la valeur 0 car la première machine motrice MM1 n'a pas de raison d'être couplée au train arrière TR.

Entre les instants t1 (exclus) et t2 (exclus), le couple requis c2 (et donc la volonté d'agir du conducteur) est décroissant et négatif. Le moteur thermique MT étant toujours en fonctionnement (du fait que sa consigne de couple cp_{MT} est non nulle), le dispositif DA commence à effectuer des comparaisons entre le couple requis c2 et (ici) la somme du premier seuil s1 et du premier couple de confirmation cc1 et la somme du second seuil s2 et du second couple de confirmation cc2. Dans cet intervalle de temps t1-t2, le couple requis c2 demeure supérieur à la somme du premier seuil s1 et du premier couple de confirmation cc1. Par conséquent, la variable de couplage c4 demeure à la valeur 0 car la première machine motrice MM1 n'a pas de raison d'être couplée au train arrière TR.

On notera que dans l'exemple illustré non limitativement sur la figure 2 les premier cc1 et second cc2 couples de confirmation sont positifs. Mais ils pourraient être négatifs ou nuls.

A l'instant t2, le couple requis c2 (et donc la volonté d'agir du conducteur) devient égal au second seuil s2. Par conséquent, la consigne de couple cp_{MT} du moteur thermique MT devient égale à zéro (0), et donc on cesse d'injecter du carburant dans ce moteur thermique MT.

Entre les instants t2 (inclus) et t3 (exclus), le couple requis c2 (et donc la volonté d'agir du conducteur) demeure toujours négatif et décroissant mais supérieur à la somme du premier seuil s1 et du premier couple de confirmation cc1, et donc la consigne de couple c3 de la seconde machine motrice MM2 se met à croître négativement pour suivre la volonté du conducteur. La seconde machine motrice MM2 va donc prélever du couple de façon plus importante.

Entre les instants t3 (inclus) et t4 (inclus), le couple requis c2 (et donc la volonté d'agir du conducteur) est toujours négatif et décroissant mais il est désormais inférieur à la somme du premier seuil s1 et du premier couple de confirmation cc1. Il existe donc un besoin de couplage de la première machine motrice MM1. Cependant, on attend ici pendant une première durée d1 avant de décider de l'opportunité de procéder au couplage de la première machine motrice MM1. L'objectif est en effet d'éviter un changement de volonté du conducteur. Par conséquent, la variable de couplage c4 demeure à la valeur 0.

A l'instant t4 (égal à t3 + d1), si le couple requis c2 est toujours inférieur à la somme du premier seuil s1 et du premier couple de confirmation cc1 et/ou si la première intégrale I1 de la courbe du couple requis c2 sur la première durée d1 est supérieure à une première valeur v1, on (le dispositif DA) ordonne le couplage de la première machine motrice MM1. On considère en effet que l'opportunité de procéder au couplage de la première machine motrice MM1 est confirmée, et on a profité pleinement du potentiel de récupération de couple de la seconde machine motrice MM2. Par conséquent, la variable de couplage c4 devient égale à la valeur 1 pour requérir un couplage immédiat. La première machine motrice MM1 va alors commencer à récupérer du couple.

Entre les instants t4 (inclus) et t5 (inclus), le couple requis c2 (et donc la volonté d'agir du conducteur) continue de décroitre et donc demeure inférieur au premier seuil s1. Par conséquent, la variable de couplage c4 demeure égale à la valeur 1 pour maintenir le couplage de la première machine motrice MM1 afin de lui permettre de récupérer du couple.

Entre les instants t5 (exclus) et t6 (exclus), le couple requis c2 (et donc la volonté d'agir du conducteur) recommence à croître, mais il demeure négatif et inférieur au second seuil s2. Par conséquent, la variable de couplage c4 demeure égale à la valeur 1 pour maintenir le couplage de la première machine motrice MM1 et lui permettre de récupérer du couple.

A l'instant t6, le couple requis c2 (et donc la volonté d'agir du conducteur) redevient égal au second seuil s2. Par conséquent, on décide de recommencer à injecter du carburant dans le moteur thermique MT en faisant croitre sa consigne de couple cp_{MT}, alors que dans le même temps la consigne de couple c3 de la seconde machine motrice MM2 redevient égale au couple de prélèvement minimum cprmin_{MM2}.

Entre les instants t6 (exclus) et t7 (exclus), le couple requis c2 (et donc la volonté d'agir du conducteur) continue de croître, mais il demeure négatif et inférieur à la somme du second seuil s2 et du second couple de confirmation cc2. Par conséquent, la variable de couplage c4 demeure égale à la valeur 1 pour maintenir le couplage de la première machine motrice MM1 afin de lui permettre de récupérer du couple.

A l'instant t7, le couple requis c2 (et donc la volonté d'agir du conducteur) redevient égal à la somme du second seuil s2 et du second couple de confirmation cc2. Par conséquent, il devient possible de découpler la première machine motrice MM1. Cependant, on attend ici pendant une seconde durée d2 avant de décider de l'opportunité de procéder au découplage de la première machine motrice MM1. L'objectif est en effet d'éviter un changement de volonté du conducteur. Par conséquent, la variable de couplage c4 demeure à la valeur 1.

A l'instant t8 (égal à t7 + d2), si le couple requis c2 est toujours supérieur à la somme du second seuil s2 et du second couple de confirmation cc2 et/ou si la seconde intégrale I2 de la courbe du couple requis c2 sur la seconde durée d2 est supérieure à une seconde valeur v2, on (le dispositif DA) ordonne le découplage de la première machine motrice MM1. On considère en effet que l'opportunité de procéder au découplage de la première machine motrice MM1 est confirmée, et on a profité pleinement de son potentiel de récupération de couple. Par conséquent, la variable de couplage c4 redevient égale à la valeur 0 pour requérir un découplage immédiat. La première machine motrice MM1 cesse alors de récupérer du couple.

## Revendications

1. Procédé d'aide au couplage/découplage d'une première machine motrice (MM1) à une chaîne de transmission d'un véhicule hybride (V) comprenant en outre un moteur thermique (MT) et une seconde machine motrice (MM2) propre à être couplée à ce dernier (MT), **caractérisé en ce qu'**il comprend une étape dans laquelle, en cas de fonctionnement dudit moteur thermique (MT) et d'un couple requis négatif, on compare ledit couple requis à au moins un premier seuil s1, égal à la somme d'un couple de perte cp_{MT} dudit moteur thermique (MT) et d'un couple de prélèvement maximum cprmax_{MM2} de ladite seconde machine motrice (MM2), et à au moins un second seuil s2, égal à la somme dudit couple de perte cp_{MT} et d'un couple de prélèvement minimum cprmin_{MM2} de ladite seconde machine motrice (MM2), et lorsque ledit couple requis devient inférieur à au moins ledit premier seuil s1 on ordonne ledit couplage de la première machine motrice (MM1), puis lorsque ledit couple requis devient supérieur à au moins ledit second seuil s2 on ordonne ledit découplage de la première machine motrice (MM1).

2. Procédé selon la revendication 1, **caractérisé en ce que** l'on compare ledit couple requis à une somme dudit premier seuil s1 et d'un premier couple de confirmation cc1.

3. Procédé selon l'une des revendications 1 et 2, **caractérisé en ce que** l'on compare ledit couple requis à une somme dudit second seuil s2 et d'un second couple de confirmation cc2.

4. Procédé selon l'une des revendications 1 à 3, **caractérisé en ce que** l'on ordonne ledit couplage de la première machine motrice (MM1) lorsque ledit couple requis demeure inférieur à au moins ledit premier seuil s1 pendant une première durée d1 choisie et/ou lorsqu'une intégrale d'une courbe dudit couple requis sur ladite première durée d1 est supérieure à une première valeur v1.

5. Procédé selon la revendication 4, **caractérisé en ce que** ladite première durée d1 et/ou ladite première valeur v1 est/sont fonction d'au moins un paramètre choisi dans un groupe comprenant une vitesse en cours dudit véhicule (V), une pente en cours d'une voie de circulation sur laquelle circule ledit véhicule (V), et un mode de roulage sélectionné dudit véhicule (V).

6. Procédé selon l'une des revendications 1 à 5, **caractérisé en ce que** l'on ordonne ledit découplage de la première machine motrice (MM1) lorsque ledit couple requis demeure supérieur à au moins ledit second seuil s2 pendant une seconde durée d2 choisie et/ou lorsqu'une intégrale d'une courbe dudit couple requis sur ladite seconde durée d2 est supérieure à une seconde valeur v2.

7. Procédé selon la revendication 6, **caractérisé en ce que** ladite seconde durée d2 et/ou ladite seconde valeur v2 est/sont fonction d'au moins un paramètre choisi dans un groupe comprenant une vitesse en cours dudit véhicule (V), une pente en cours d'une voie de circulation sur laquelle circule ledit véhicule (V), et un mode de roulage sélectionné dudit véhicule (V).

8. Dispositif (DA) d'aide au couplage/découplage d'une première machine motrice (MM1) à une chaîne de transmission d'un véhicule hybride (V) comprenant en outre un moteur thermique (MT) et une seconde machine motrice (MM2) propre à être couplée à ce dernier (MT), **caractérisé en ce qu'**il est agencé, en cas de fonctionnement dudit moteur thermique (MT) et d'un couple requis négatif, pour comparer ledit couple requis à au moins un premier seuil s1, égal à la somme d'un couple de perte cp_{MT} dudit moteur thermique (MT) et d'un couple de prélèvement maximum cprmax_{MM2} de la seconde machine motrice, et à au moins un second seuil s2, égal à la somme dudit couple de perte cp_{MT} et d'un couple de prélèvement minimum cprmin_{MM2} de la seconde machine motrice (MM2), et lorsque ledit couple requis devient inférieur à au moins ledit premier seuil s1 pour ordonner ledit couplage de la première machine motrice (MM1), puis lorsque ledit couple requis devient supérieur à au moins ledit second seuil s2 pour ordonner ledit découplage de la première machine motrice (MM1).

9. Véhicule hybride (V) comprenant une chaîne de transmission comportant une première machine motrice (MM1), un moteur thermique (MT) et une seconde machine motrice (MM2) propre à être couplée à ce dernier (MT), **caractérisé en ce qu'**il comprend en outre un dispositif d'aide (DA) selon la revendication 8.

10. Véhicule selon la revendication 9, **caractérisé en ce que** chaque machine motrice (MMj) est choisie dans un groupe comprenant un moteur électrique, une machine hydraulique, une machine pneumatique et un volant d'inertie.

## Patentansprüche

1. Verfahren zur Unterstützung des Koppelns/Entkoppelns einer ersten Antriebsmaschine (MM1) mit einem Antriebsstrang eines Hybridfahrzeugs (V), das außerdem eine Brennkraftmaschine (MT) umfasst, und eine zweite Antriebsmaschine (MM2), die geeignet ist, mit dieser Letzteren (MT) gekoppelt zu werden, **dadurch gekennzeichnet, dass** es einen Schritt umfasst, bei dem im Falle des Betriebs der Brennkraftmaschine (MT) und eines erforderlichen negativen Drehmoments das erforderliche Drehmoment mit mindestens einem ersten Schwellenwert s1 verglichen wird, der gleich der Summe eines Verlustdrehmoments cp_{MT} der Brennkraftmaschine (MT) und eines maximalen Rückgewinnungsdrehmoments cprmax_{MM2} der zweiten Antriebsmaschine (MM2) ist, und mit mindestens einem zweiten Schwellenwert s2, der gleich der Summe des Verlustdrehmoments cp_{MT} und eines minimalen Rückgewinnungsdrehmoments cprmin_{MM2} der zweiten Antriebsmaschine (MM2) ist, und wenn das erforderliche Drehmoment kleiner wird als mindestens der erste Schwellenwert s1, das Koppeln der ersten Antriebsmaschine (MM1) angeordnet wird, dann, wenn das erforderliche Drehmoment größer wird als mindestens der zweite Schwellenwert s2, das Entkoppeln der ersten Antriebsmaschine (MM1) angeordnet wird.

2. Verfahren nach Anspruch 1, **dadurch gekennzeichnet, dass** das erforderliche Drehmoment mit einer Summe des ersten Schwellenwerts s1 und eines ersten Bestätigungsdrehmoments cc1 verglichen wird.

3. Verfahren nach einem der Ansprüche 1 und 2, **dadurch gekennzeichnet, dass** das erforderliche Drehmoment mit einer Summe des zweiten Schwellenwerts s2 und eines zweiten Bestätigungsdrehmoments cc2 verglichen wird.

4. Verfahren nach einem der Ansprüche 1 bis 3, **dadurch gekennzeichnet, dass** das Koppeln der ersten Antriebsmaschine (MM1) angeordnet wird, wenn das erforderliche Drehmoment während einer ersten Dauer d1, die ausgewählt wird und/oder wenn das Integral einer Kurve des erforderlichen Drehmoments auf der ersten Dauer d1 größer ist als ein erster Wert v1, kleiner bleibt als mindestens der erste Schwellenwert s1.

5. Verfahren nach Anspruch 4, **dadurch gekennzeichnet, dass** die erste Dauer d1 und/oder der erste Wert v1 mindestens von einem Parameter abhängt/abhängen, der aus einer Gruppe ausgewählt ist, die eine aktuelle Geschwindigkeit des Fahrzeugs (V), ein aktuelles Gefälle einer Fahrbahn, auf der das Fahrzeug (V) fährt, und einem ausgewählten Fahrmodus des Fahrzeugs (V) besteht.

6. Verfahren nach einem der Ansprüche 1 bis 5, **dadurch gekennzeichnet, dass** das Entkoppeln der ersten Antriebsmaschine (MM1) angeordnet wird, wenn das erforderliche Drehmoment während einer zweiten Dauer d2, die ausgewählt wird und/oder wenn das Integral einer Kurve des erforderlichen Drehmoments auf der zweiten Dauer d2 größer ist als ein zweiter Wert v2, größer bleibt als mindestens der zweite Schwellenwert s2.

7. Verfahren nach Anspruch 6, **dadurch gekennzeichnet, dass** die zweite Dauer d2 und/oder der zweite Wert v2 von mindestens einem Parameter abhängt/abhängen, der aus einer Gruppe ausgewählt ist, die eine aktuelle Geschwindigkeit des Fahrzeugs (V), ein aktuelles Gefälle einer Fahrbahn, auf der das Fahrzeug (V) fährt, und einem ausgewählten Fahrmodus des Fahrzeugs (V) besteht.

8. Vorrichtung (DA) zum Unterstützen beim Koppeln/Entkoppeln einer ersten Antriebsmaschine (MM1) mit/von einem Antriebsstrang eines Hybridfahrzeugs (V), das außerdem eine Brennkraftmaschine (MT) und eine zweite Antriebsmaschine (MM2) umfasst, die geeignet ist, um mit dieser Letzteren (MT) gekoppelt zu werden, **dadurch gekennzeichnet, dass** sie eingerichtet ist, um im Falle des Betriebs der Brennkraftmaschine (MT) und eines erforderlichen negativen Drehmoments das erforderliche Drehmoment mit mindestens einem ersten Schwellenwert s1, der gleich der Summe eines Verlustdrehmoments cp_{MT} der Brennkraftmaschine (MT) und eines maximalen Rückgewinnungsdrehmoments cprmax_{MM2} der zweiten Antriebsmaschine ist, zu vergleichen, und mit mindestens einem zweiten Schwellenwert s2, der gleich der Summe des Verlustdrehmoments cp_{MT} und eines minimalen Rückgewinnungsdrehmoments cprmin_{MM2} der zweiten Antriebsmaschine (MM2) ist, und, wenn das erforderliche Drehmoment kleiner wird als mindestens der erste Schwellenwert s1, das Koppeln der ersten Antriebsmaschine (MM1) anzuordnen, dann, wenn das erforderliche Drehmoment größer wird als der mindestens zweite Schwellenwert s2, ein Entkoppeln der ersten Antriebsmaschine (MM1) anzuordnen.

9. Hybridfahrzeug (V), das einen Antriebsstrang umfasst, der eine erste Antriebsmaschine (MM1), eine Brennkraftmaschine (MT) und eine zweite Antriebsmaschine (MM2) umfasst, die geeignet ist, um an diese Letztere (MT) gekoppelt zu werden, **dadurch gekennzeichnet, dass** es außerdem eine Vorrichtung (DA) zur Unterstützung nach Anspruch 8 umfasst.

10. Fahrzeug nach Anspruch 9, **dadurch gekennzeichnet, dass** jede Antriebsmaschine (MMj) aus einer Gruppe ausgewählt ist, die einen Elektromotor, eine hydraulische Maschine, eine pneumatische Maschine und ein Schwungrad umfasst.

## Claims

1. A method for assisting with the coupling/uncoupling of a first prime mover (MM1) to a drive train of a hybrid vehicle (V) further including a combustion engine (MT) and a second prime mover (MM2) suitable to be coupled to the latter (MT), **characterized in that** it includes a step in which, in the case of operation of said combustion engine (MT) and of a negative required torque, said required torque is compared to at least a first threshold s1, equal to the sum of a loss torque cp_{MT} of said combustion engine (MT) and of a maximum sample torque cprmax_{MM2} of said second prime mover (MM2), and to at least a second threshold s2, equal to the sum of said loss torque cp_{MT} and of a minimum sample torque cprmin_{MM2} of said second prime mover (MM2), and when said required torque becomes less than at least said first threshold s1, said coupling of the first prime mover (MM1) is ordered, then when said required torque becomes greater than at least said second threshold s2, said uncoupling of the first prime mover (MM1) is ordered.

2. The method according to Claim 1, **characterized in that** said required torque is compared to a sum of said first threshold s1 and of a first confirmation torque cc1.

3. The method according to one of Claims 1 and 2, **characterized in that** said required torque is compared to a sum of said second threshold s2 and of a second confirmation torque cc2.

4. The method according to one of Claims 1 to 3, **characterized in that** said coupling of the first prime mover (MM1) is ordered when said required torque remains less than at least said first threshold s1 for a first selected duration d1 and/or when an integral of a curve of said required torque over said first duration d1 is greater than a first value v1.

5. The method according to Claim 4, **characterized in that** said first duration d1 and/or said first value v1 is/are a function of at least one parameter selected in a group including a current speed of said vehicle (V), a current incline of a roadway on which said vehicle (V) is travelling, and a selected running mode of said vehicle (V).

6. The method according to one of Claims 1 to 5, **characterized in that** said uncoupling of the first prime mover (MM1) is ordered when said required torque remains greater than at least said second threshold s2 for a second selected duration d2 and/or when an integral of a curve of said required torque over said second duration d2 is greater than a second value v2.

7. The method according to Claim 6, **characterized in that** said second duration d2 and/or said second value v2 is/are a function of at least one parameter selected in a group including a current speed of said vehicle (V), a current incline of a roadway on which said vehicle (V) is travelling, and a selected running mode of said vehicle (V).

8. A device (DA) for assisting with the coupling/uncoupling of a first prime mover (MM1) to a drive train of a hybrid vehicle (V) further including a combustion engine (MT) and a second prime mover (MM2) suitable to be coupled to the latter (MT), **characterized in that** it is arranged, in the case of operation of said combustion engine (MT) and of a negative required torque, for comparing said required torque to at least a first threshold s1, equal to the sum of a loss torque cp_{MT} of said combustion engine (MT) and of a maximum sample torque cprmax_{MM2} of the second prime mover, and to at least a second threshold s2, equal to the sum of said loss torque cp_{MT} and of a minimum sample torque cprmin_{MM2} of the second prime mover (MM2), and when said required torque becomes less than at least said first threshold s1 for ordering said coupling of the first prime mover (MM1), then when said required torque becomes greater than at least said second threshold s2 for ordering said uncoupling of the first prime mover (MM1).

9. A hybrid vehicle (V) including a drive train comprising a first prime mover (MM1), a combustion engine (MT) and a second prime mover (MM2) suitable to be coupled to the latter (MT), **characterized in that** it further includes an assisting device (DA) according to Claim 8.

10. The vehicle according to Claim 9, **characterized in that** each prime mover (MMj) is selected in a group including an electric motor, a hydraulic machine, a pneumatic machine and a flywheel.
